# EUROPEAN PATENT SPECIFICATION

(11) **EP 4 375 349 B1**
(45) Date of publication and mention of the grant of the patent: **10.06.2026**
(21) Application number: 22827726.5
(22) Date of filing: 01.08.2022
(51) Int. Cl.: C10B 53/02, C10B 57/02, C10B 57/00, B01D 47/06, C10J 3/00, C10J 3/72, C10K 1/02, C10B 7/06, B01D 45/08, B01D 50/40, C10B 7/10, C10B 49/04, C10C 5/00, C10K 1/06, C10K 1/08, C10K 1/10

(54) **DEVICE AND METHOD FOR RAPIDLY PREPARING CARBON FROM STRAWS AND RECYCLING AND TREATING FLUE GAS AND SMOKE DUST**
VORRICHTUNG UND VERFAHREN ZUR SCHNELLEN HERSTELLUNG VON HOLZKOHLE MITTELS STROH UND ZUR RÜCKFÜHRUNG UND BEHANDLUNG VON RAUCHGAS UND RUSS
APPAREIL ET PROCÉDÉ DE PRODUCTION RAPIDE DE CHARBON AU MOYEN DE PAILLE ET DE RECYCLAGE ET DE TRAITEMENT DE FUMÉE ET DE SUIE

(30) Priority: 25.06.2021 CN 202110711054; 20.06.2022 CN 202210697132
(43) Date of publication of application: 29.05.2024
(73) Proprietor: Wang, Xiaoguang, Taiyuan, Shanxi 030002 (CN)
(72) Inventor: Wang, Xiaoguang, Taiyuan, Shanxi 030002 (CN)
(74) Representative: Müller-Boré & Partner Patentanwälte PartG mbB
(86) International application number: PCT/CN2022/109408
(87) International publication number: WO 2022/268234

(56) References cited:
- WO-A1-2011/103768
- CN-A- 1 563 277
- CN-A- 101 693 161
- CN-A- 101 775 299
- CN-A- 102 134 497
- CN-A- 104 629 805
- CN-A- 105 727 658
- CN-A- 111 905 509
- CN-A- 113 293 015
- CN-U- 206 799 551
- CN-U- 209 193 892
- CN-U- 210 394 269
- JP-A- 2000 044 965
- JP-A- 2002 053 868
- JP-A- 2003 089 791
- JP-A- 2005 041 944
- US-A1- 2003 000 390
- US-A1- 2013 098 750

## Description

### TECHNICAL FIELD

The present application belongs to the technical field of pyrolysis and carbonization of crop straws, specifically to a device and method for rapidly preparing carbon from straws and recycling and treating flue gas and smoke dust.

### BACKGROUND

Pyrolysis and carbonization of crop straws play an important role in the comprehensive utilization of the straws. Carbonization methods and equipment are becoming more mature in a process of technological progress, but there are still some defects, such as patent No. ZL 201110042313.X and European patent No. 2540803, entitled "Method and Device for Preparing Carbon from Crop Straws". The device has a novel carbon preparation method and high carbonization efficiency, and mainly aims to recycle biomass carbon. However, there are the following defects:
1. Gaseous straw biomass produced by an original patented device in a pyrolysis process of carbon preparation is directly discharged into the atmosphere, resulting in a waste of resources.
2. According to the original patented device, under the condition of a certain feeding amount, the way to control the degree of pyrolysis of a material is the perception of an operator, which is achieved by turning a fire grate, so that the stability of a pyrolyzed material is difficult to control.

A settling chamber provided in the original patented device only makes part of suspended particles in the flue gas settle down and clears away the suspended particles through a longitudinal partition plate, and a large amount of biomass energy flue gas generated in the pyrolysis process of carbon preparation is directly discharged with a large number of suspended particles. Meanwhile, a large amount of water for cooling, fire extinguishing and dust falling will be required by the carbonized straw in a process of returning the straw carbon to the field or packaging the carbonized straw for reuse, so the device is difficult to use in water-deficient areas.

The patent documents CN 206 799 551 U, US 2013/098750 A1, CN 111 905 509 A, US 2003/000390 A1 and CN 105 727 658 A generally relate to gas cleaning or scrubbing arrangements using baffles or partition plates and spray devices, and, in one case, to controlled air or oxygen supply in a gasifier.

### SUMMARY

For the defects or shortcomings in the above related art, the technical problem to be solved in the present application is to provide a device and method for rapidly preparing carbon from straws and recycling and treating flue gas and smoke dust.

In order to resolve the above technical problem, the present application is realized through the technical solutions as claimed in claim 1.

The collection and separation chamber further includes a dust falling area which is communicated with the separation area; and after entering the dust falling area of the collection and separation chamber through the flue gas inlet, the flue gas enters the separation area and is then discharged.

Optionally, a water pump is arranged on the collection and separation chamber, and an outlet of the water pump is connected to the sprayer I respectively through a pipeline.

The separation area includes a partition plate I and a partition plate II which are disposed at upper and lower positions; the flue gas enters the separation area from above the partition plate II; and the flue gas enters an exhaust funnel from below the partition plate I.

A collection box is further arranged below the separation area.

The collection box is further communicated with the sprayer I; and/or, a water pump is further connected between the collection box and the sprayer I.

Optionally, an upper part of the collection box is provided with a collected liquid outlet, and a bottom of the collection box is provided with a sewage draining exit.

Optionally, a bottom of the dust falling area is provided with a cleaning door.

At least one partition plate III, at least one partition plate IV, or at least one partition plate III and one partition plate IV which are disposed on the left and right in a spacing manner are arranged in the dust falling area for allowing the flue gas to pass. The flue gas collection efficiency is improved; impurities in the flue gas are reduced; and the purity of straw vinegar is increased.

Optionally, a thermal insulation material is arranged between the pyrolysis and carbonization chamber and the collection and separation chamber.

Optionally, a conveying device used for conveying a material is mounted in the pyrolysis and carbonization chamber.

The conveying device includes a parallel conveying device, and the parallel conveying device adopts a parallel chain scraper conveyor.

Optionally, a material inlet of the pyrolysis and carbonization chamber is further communicated with a feeding device, and/or, a material outlet of the pyrolysis and carbonization chamber is further communicated with a discharging device.

Optionally, the feeding device adopts a chain scraper conveyor; and/or, the discharging device adopts a screw conveyor I; and an outlet of the screw conveyor I is connected with a discharging barrel.

Optionally, the device further includes a discharging barrel, which is arranged at an outlet of the discharging device; and a screw conveyor II is further mounted in the discharging barrel.

Optionally, a sprayer II is further mounted in the discharging barrel, and/or, the sprayer II is further connected with a collection box.

The pyrolysis and carbonization chamber is integrally connected; and/or, the pyrolysis and carbonization chamber is further provided with an oxygen supply opening and an oxygen control valve.

In another aspect, the present application further provides a method for rapidly preparing carbon from straws and recycling and treating flue gas and smoke according to claim 14.

The method further includes: recycling the straw vinegar, wherein the recycled straw vinegar falls off to be collected, and the collected straw vinegar enters a spraying circulating system; and finally, the flue gas enters a flue and is discharged.

Optionally, the method further includes: before introducing the flue gas into the separation area, introducing the flue gas into a dust falling area of the collection and separation chamber, introducing the flue gas produced by the pyrolysis and carbonization chamber in running into the collection and separation chamber via the flue gas inlet, and at least separately treating the flue gas in the dust falling area and the separation area in the collection and separation chamber.

Compared with the prior art, the present application has the following technical effects:
According to the present application, the separation area is used to recycle, through the sprayer I, gaseous biomass energy produced during the pyrolysis, and biomass energy conversion liquid is used to replace water; the gaseous biomass energy is continuously recycled and converted, and the main component-biomass energy in the flue gas is converted into the straw vinegar for recycling, so that the utilization rate of biomass energy of straws of the original device is increased by 30-33% to 50%; and meanwhile, the biomass energy conversion liquid replaces water to make suspended particles produced during the pyrolysis and carbonization settle down. Main components of the straw biomass are cellulose and hemicellulose. Cellulose and hemicellulose are also main components of biomass energy in pyrolysis gas, which are discharged from the original device and not reused.

**In** the present application, the collection and separation chamber is provided with the separation area, and the kinetic energy of the water pump is used to create the functions of sealing, drafting, condensation and separation.

At initial work, a spraying system in the present application has a small amount of water for circulation. The recycled straw vinegar is mixed into and participates in the spraying circulating system, and is gradually transitioned to the self-circulation of straw vinegar spraying. The biomass energy conversion liquid is used to replace water to make the suspended particles produced during the pyrolysis and carbonization settle down, which ensures the continuous running of the collection and separation chamber; and in addition, the conversion liquid is used to replace the water to perform cooling, fire extinguishing and dust falling on the carbonized material. The working environment is improved; a load of carrying a water source on the mobile device is reduced; and all-weather running of the equipment is guaranteed.

In the present application, two chain scraper conveyors are used to connect material feeding with pyrolysis, and a relationship between a feeding amount and a pyrolysis time is transformed into a relationship between mechanical transmission rates, so that it is easier and more reliable to control the pyrolysis degree. In addition, the two independent pyrolysis and carbonization tanks in the original device are changed into one chamber body that is divided into upper and lower parts by the chain scraper conveyor, and the two parts are closely connected with each other and have different functions. The thermal energy utilization efficiency of the present application is improved, thereby laying a foundation for the standard production of different types of straw carbon. For example, due to a controllable degree of pyrolysis, if the main purpose of straw carbon production is to return "carbon" to fields, and to pursue "carbon neutralization", a deep carbonization process that prolongs the carbonization time is adopted. On the contrary, if the main purpose is to kill insect eggs and pathogenic bacteria, and to return more original organic matters to fields, a light carbonization process with short carbonization time (only several minutes) is adopted.

The design of the present application is reasonable, and the device becomes a new method between a straw returning method and a straw biomass carbon returning method, and has good practical application value.

### BRIEF DESCRIPTION OF THE DRAWINGS

Other features, objectives, and advantages of the present application will become more apparent by reading the detailed descriptions made to the non-limiting embodiments with reference to the following drawings:
FIG. 1 is a schematic diagram of a technological process of a device for rapidly preparing carbon from straws and recycling and treating flue gas and smoke dust according to an embodiment of the present application.
FIG. 2 is a schematic diagram of a left side surface of a device for rapidly preparing carbon from straws and recycling and treating flue gas and smoke dust according to an embodiment of the present application.
FIG. 3 is a schematic diagram of a right side surface of a device for rapidly preparing carbon from straws and recycling and treating flue gas and smoke dust according to an embodiment of the present application.
FIG. 4 is a schematic diagram of a rear side surface of a device for rapidly preparing carbon from straws and recycling and treating flue gas and smoke dust according to an embodiment of the present application.

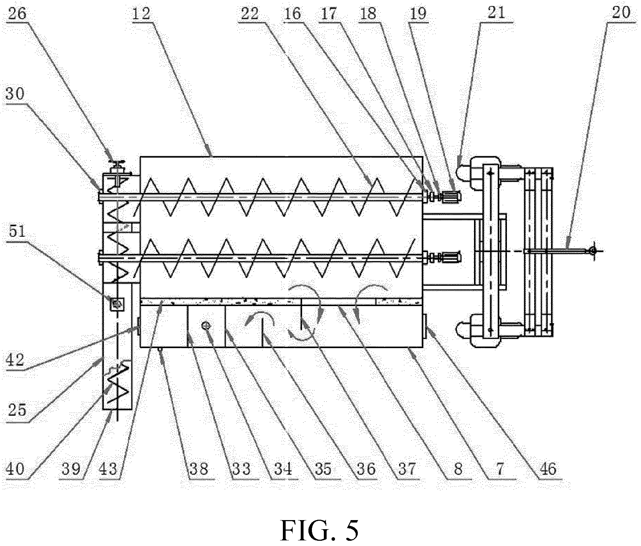

FIG. 5 is a schematic diagram of the section A-A of FIG. 4.
FIG. 6 is a schematic diagram of a collection and separation chamber in one embodiment of the present application.
FIG. 7 is a schematic diagram of the section B-B of FIG. 6.

In the drawings: 1: chain scraper conveyor; 2: motor I; 3: transmission chain I; 4: exhaust funnel; 5: parallel chain scraper conveyor; 6: oxygen supply opening and oxygen control valve; 7: collection and separation chamber; 8: flue gas inlet; 9: chain wheel ii; 10: pipeline I; 11: water pump; 12: pyrolysis and carbonization chamber; 13: transmission chain II; 14: motor II; 15: chain wheel II; 16: sealing plate; 17: bearing pedestal III; 18: shaft coupler; 19: motor III; 20: traction device; 21: front wheel; 22: screw conveyor I; 23: frame; 24: rear wheel; 25: discharging barrel; 26: chain wheel iv; 27: chain IV; 28: chain wheel IV; 29: motor IV; 30: bearing pedestal iii; 31: chain wheel I; 32: chain wheel i; 33: partition plate I; 34: sprayer I; 35: partition plate II; 36: partition plate III; 37: partition plate IV; 38: collected liquid outlet; 39: material outlet; 40: screw conveyor II; 41: sealing cover; 42: sewage draining exit; 43: thermal insulation material; 44: end cover; 45: material inlet; 46: cleaning door; 47: dust falling area; 48: collection box; 49: separation area; 50: pipeline II; 51: sprayer II; and 52: valve.

### DETAILED DESCRIPTION

The technical solutions in embodiments of the present application are clearly and completely described below with reference to the accompanying drawings in the embodiments of the present application. Apparently, the described embodiments are merely some rather than all of the embodiments of the present application. All other embodiments obtained by a person of ordinary skill in the art based on the embodiments of the present application without creative efforts shall fall within the protection scope of the present application.

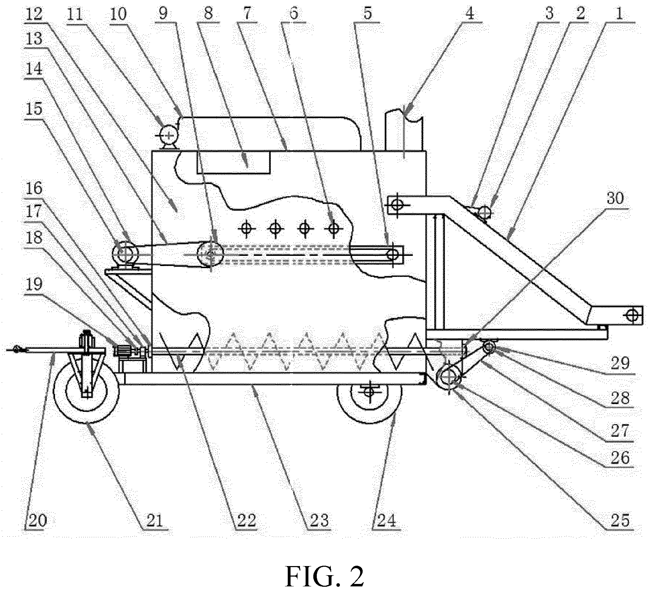

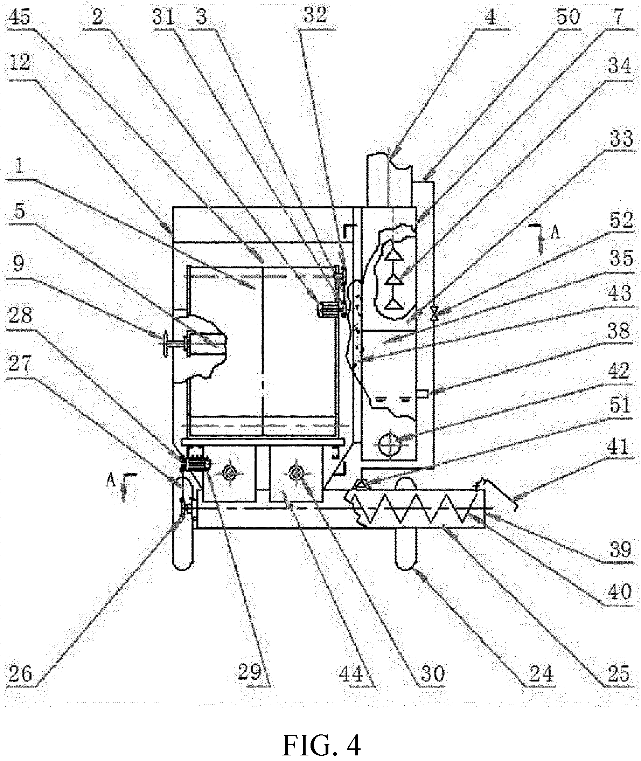

As shown in FIG. 2 to FIG. 4, in one embodiment of the present application, a device for rapidly preparing carbon from straws and recycling and treating flue gas and smoke dust includes a pyrolysis and carbonization chamber 12, and a collection and separation chamber 7;
the pyrolysis and carbonization chamber 12 and the collection and separation chamber 7 are communicated with each other through a flue gas inlet 8;
the collection and separation chamber 7 includes a separation area 49, and a sprayer I 34 is further disposed in the separation area 49; and
flue gas enters the separation area 49 through the flue gas inlet 8 and is then discharged.

According to this embodiment, the separation area 49 is used to recycle, through the sprayer I 34, gaseous biomass energy produced during the pyrolysis, and biomass energy conversion liquid is used to replace water; the gaseous biomass energy is continuously recycled and converted, and the main component-biomass energy in the flue gas is converted into straw vinegar for recycling, so that the utilization rate of biomass energy of straws of the original device is increased by 30-33% to 50%; and meanwhile, the biomass energy conversion liquid replaces water to make suspended particles produced during the pyrolysis and carbonization settle down.

In this embodiment, the pyrolysis and carbonization chamber 12 is integrally connected. Due to the above integrated design solution, the efficiency of this embodiment is greatly improved; lots of carbonization chamber materials are saved; and the operability is achieved. Similarly, due to the above integrated design solution, this embodiment puts forward higher requirements for a sealing manner: (1) a screw conveyor I 22 and a screw conveyor II 40 which are intersected by 90 degrees are disposed described below; (2) a sealing cover 41 is further arranged at an outlet of the screw conveyor II 40; and (3) the screw conveyor II 40 is further hermetically connected to a sprayer II 51 described below through a pipeline. At a pipeline outlet of the sprayer II 51, cold spraying liquid and hot straw carbon are in contact with each other, and produced gas blocks gas outside the equipment, so that the sealing cover is opened, and intact straw carbon is pushed out. More importantly, the above integrated setting manner can achieve technical effects of "isolating oxygen during carbonization and supplying oxygen during pyrolysis".

Further, the collection and separation chamber 7 further includes a dust falling area 47. The dust falling area 47 is communicated with the separation area 7; and after entering the dust falling area 47 of the collection and separation chamber 7 through the flue gas inlet 8, the flue gas enters the separation area 49 and is then discharged.

As shown in FIG. 2 to FIG. 4, in this embodiment, the device further includes a frame 23. The pyrolysis and carbonization chamber 12 and the collection and separation chamber 7 are mounted on the frame 23. Further, a pair of front wheels 21 (for steering) is mounted at a front part of the frame 23, and a pair of rear wheels 24 is mounted at a rear part of the frame. A traction device 20 is mounted in front of the frame 23 and is connected to a towing tractor.

A thermal insulation material 43 is arranged between the pyrolysis and carbonization chamber 12 and the collection and separation chamber 7. Due to the arrangement of the thermal insulation material 43, the impact on the effect of the collection and separation chamber 7 can be avoided.

Further, in this embodiment, the pyrolysis and carbonization chamber 12 is further provided with several oxygen supply openings, and oxygen control valves are further arranged on the oxygen supply openings. The oxygen control valve is used for controlling a feeding volume of air or oxygen.

Further, in this embodiment, a conveying device used for conveying a material is mounted in the pyrolysis and carbonization chamber 12.

Optionally, the conveying device includes a parallel conveying device, and the parallel conveying device is mounted in the pyrolysis and carbonization chamber 12.

The parallel conveying device adopts a parallel chain scraper conveyor 5; the parallel chain scraper conveyor 5 includes a chain wheel ii 9, a transmission chain II 13, a motor II 14, and a chain wheel II 15; and the chain wheel ii 9 located at a front end of the parallel chain scraper conveyor 5 is connected to the chain wheel II 15 externally located at an output end of the motor II 14 through the transmission chain II 13 to achieve driving. The parallel chain scraper conveyor 5 conveys an input material from the rear part to the front part, and the input material falls to a bottom of the pyrolysis and carbonization chamber 12 after being pyrolyzed. Two parallel chain scraper conveyors 5 are used to connect material feeding with pyrolysis, and a relationship between a feeding amount and a pyrolysis time is transformed into a relationship between mechanical transmission rates, so that it is easier and more reliable to control the pyrolysis degree.

A material inlet 45 of the pyrolysis and carbonization chamber 12 is further communicated with a feeding device, and/or, a material outlet 39 of the pyrolysis and carbonization chamber 12 is further communicated with a discharging device. The feeding device is mounted at a tail part of the frame 23.

Further optionally, the feeding device adopts a chain scraper conveyor 1. The chain scraper conveyor 1 includes a motor I 2, a chain wheel I 31, a transmission chain I 3, and a chain wheel i 32; the chain wheel I 31 at an output end of the motor I 2 is connected to the chain wheel i 32 at a driving end of the chain scraper conveyor 1 through the transmission chain I 3 to achieve driving; and the chain scraper conveyor 11 conveys the material into the pyrolysis and carbonization chamber 12 through the material inlet 45.

In this embodiment, the discharging device adopts a screw conveyor I 22, and an outlet of the screw conveyor I 22 is connected with a discharging barrel 25. In this embodiment, two screw conveyors I 22 are disposed side by side (to increase the discharging rate) to discharge materials together; an output shaft of a motor III 19 located at the front part of the frame 23 is connected to one end of a rotating shaft through the shaft coupler 18; one end of the rotating shaft is fixedly mounted through a bearing pedestal III 17 and penetrates into the bottom of the pyrolysis and carbonization chamber 12 through a sealing plate 16; and the other end of the rotating shaft is supported at an end cover 44 through a bearing pedestal iii 30.

Outlets of the two screw conveyors are respectively connected to the discharging barrel 25, and the screw conveyor II 40 is mounted in the discharging barrel 25; and the sealing cover 41 is mounted at a material outlet 39 of the discharging barrel 25. A chain wheel IV 28 of an output end of the motor IV 29 located at the front part of the frame 23 is connected to a chain wheel iv 26 located at an extending end of a rotating shaft of the screw conveyor II 40 through a transmission chain IV 27 to drive the screw conveyor II 40. The straw carbon is moved, fed and exported through the vertically disposed screw conveyors with different functions.

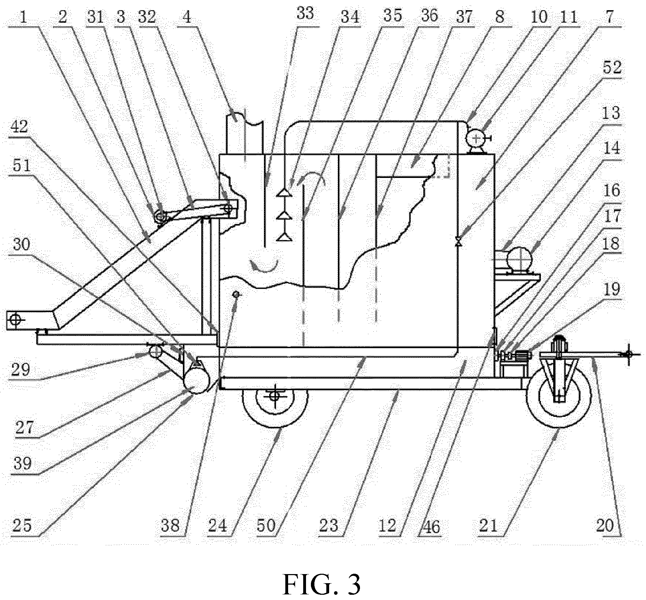

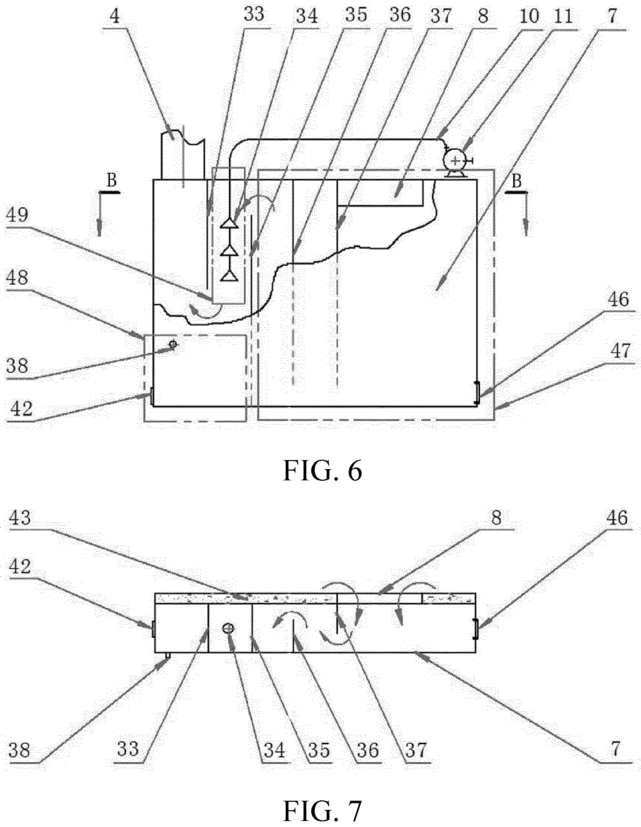

As shown in FIG. 3, the pyrolysis and carbonization chamber 12 and the collection and separation chamber 7 are communicated with each other through the flue gas inlet 8 located at the upper part. As shown in FIG. 6, after passing through the flue gas inlet 8, flue gas first enters the dust falling area 47 of the collection and separation chamber 7, then enters the separation area 49, and finally enters a flue, so as to be discharged by an exhaust funnel 4.

As shown in FIG. 7, a main body of the collection and separation chamber 7 includes the dust falling area 47, the separation area 49, the flue (the exhaust funnel 4) and a collection box 48. At least one partition plate III 36, at least one partition plate IV 37, or at least one partition plate III 36 and one partition plate IV 37 which are disposed on the left and right in a spacing manner are arranged in the dust falling area 47 for allowing the flue gas to pass. Due to the arrangement of the above partition plates, the flue gas collection efficiency can be improved, impurities in the flue gas can be reduced, and the purity of straw vinegar recycling can be increased.

In this embodiment, preferably, a labyrinth passage composed of the partition plate III 36 and the partition plate IV 37 which are transversely disposed on the left and right is formed in the dust falling area 47 for allowing the flue gas to pass, and dust falling is carried out; and a cleaning door 46 is arranged at a bottom of the dust falling area 47. The separation area 49 is a core area of this chamber. As shown in FIG. 6, the separation area 49 includes a lower partition plate, an upper partition plate, and a sprayer I 34 (including a pipeline I 10 used therewith and a water pump 11) between the two partition plates. Specifically, the separation area 49 is composed of a partition plate I 33 (used as the upper partition plate) and a partition plate II 35 (used as the lower partition plate) which are disposed at upper and lower positions. The flue gas enters the separation area 49 from above the partition plate II 35 and enters the flue (the exhaust funnel 4) from below the partition plate I 33.

The sprayer I 34 is arranged in the separation area 49 and is used for cooling the recycled straw vinegar; and the collection box 48 is arranged below the separation area 49. An upper part of the collection box 48 is provided with a collected liquid outlet 38, and a bottom of the collection box is provided with a sewage draining exit 42. The collection box 48 may be communicated with the sprayer I 34.

Further, the water pump 11 is arranged on a top surface of the collection and separation chamber 7; an outlet of the water pump 11 is respectively connected to the sprayer I 34 and the sprayer II 51 through the pipeline I 10 and a pipeline II 50; the sprayer II 51 is located in the discharging barrel 25; and the sprayer II 51 (including a valve 52 assorted therewith, a pipeline and the water pump 11) is used for performing fire extinguishing and dust removal on the straw carbon exported by the screw conveyor II 40. The sprayer II 51 may be further connected to the above collection box 48.

In this embodiment, the sprayer II 51 and the sprayer I 34 may share the same water pump 11.

Further, the sealing cover 41 is mounted at the material outlet 39 of the discharging barrel 25.

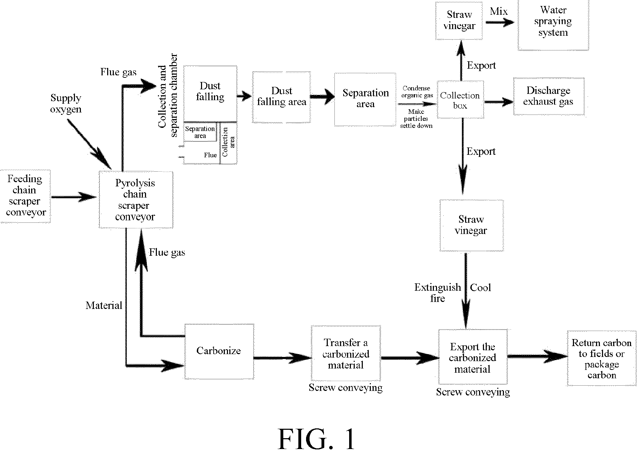

As shown in FIG. 1, in this embodiment, a method for rapidly preparing carbon from straws and recycling and treating flue gas and smoke dust is provided, the method including:
step I, straws that are ignited outside are introduced into a pyrolysis and carbonization chamber 12;
step II, flue gas produced by the pyrolysis and carbonization chamber 12 in running is introduced into a collection and separation chamber 7 via a flue gas inlet 8, and the flue gas is at least separately treated in a separation area 49 in the collection and separation chamber 7; and
step III, the flue gas is introduced into the separation area 49, and main component-biomass energy in the flue gas is converted into straw vinegar using a sprayer I 34 in the separation area.

Further, the method further includes step IV: the straw vinegar is recycled, wherein the recycled straw vinegar falls off to be collected, and the collected straw vinegar enters a spraying circulating system; and finally, the flue gas enters a flue and is discharged.

### Step I, .

Step II, the straws are continuously introduced to a conveying device in the pyrolysis and carbonization chamber 12 for pyrolysis, and a pyrolyzed material is conveyed to the tail end by the conveying device and falls to a lower part in the pyrolysis and carbonization chamber 12 for carbonization,
wherein the conveying device divides the pyrolysis and carbonization chamber 12 into an upper part and a lower part with different functions: the upper part is a pyrolysis area and the lower part is a carbonization area.

Step III, flue gas and smoke dust which are produced by the pyrolysis and carbonization chamber 12 in running are introduced into a collection and separation chamber 7 via a flue gas inlet 8, and the flue gas and the smoke dust are separately treated in different areas such as the dust falling area 47, the separation area 49 and a flue in the collection and separation chamber 7.

Step IV, the flue gas enters the separation area 49; main component-biomass energy in the flue gas is converted into straw vinegar using a sprayer I 34 in the separation area 49; the recycled straw vinegar falls off to be collected, and the collected straw vinegar enters a spraying circulating system; and finally, the flue gas enters the flue and is discharged.

In the method of this embodiment, the technical solution of the device involved refers to the description above, and descriptions thereof are omitted here.

Further, in the above step I, the straws that are ignited outside are introduced into the pyrolysis and carbonization chamber 12 and fall to the upper part of the conveying device. Specifically, the straws that are ignited outside are first introduced into the pyrolysis and carbonization chamber 12 by a chain scraper conveyor 1 and fall to the upper part of a parallel chain scraper conveyor 5. In this embodiment, the conveying device is preferably a parallel conveying device, more preferably the parallel chain scraper conveyor 5.

The straws are then continuously introduced by the chain scraper conveyor 1 to the parallel chain scraper conveyor 5 in the pyrolysis and carbonization chamber 12 for pyrolysis; the volume of fed oxygen is adjusted by controlling the oxygen supply opening and oxygen control valve 6 to adjust the pyrolysis degree; and two speed-adjustable chain scraper conveyors (the chain scraper conveyor 1 and the parallel chain scraper conveyor 5) are adopted for feeding and pyrolysis, so that a manually controlled feeding volume and the pyrolysis time are transformed into a transmission rate relationship between the two chain scraper conveyors. The pyrolyzed material is conveyed by the parallel chain scraper conveyor 5 to the tail end and falls to the lower part in the pyrolysis and carbonization chamber 12 for carbonization.

The conveying device divides the pyrolysis and carbonization chamber 12 into an upper part and a lower part with different functions: the upper part is a pyrolysis area and the lower part is a carbonization area. Specifically, the parallel chain scraper conveyor 5 divides the pyrolysis and carbonization chamber 12 into the upper part and the lower part with different functions: the upper part is the pyrolysis area and the lower part is the carbonization area.

A screw conveyor I 22 located at the bottom conveys the carbonized material to a discharging barrel 25, and a screw conveyor II 40 exports the carbonized material sent by the screw conveyor I 22 after the carbonized material is subjected to cooling, fire extinguishing and dust removal by a sprayer II 51.

In the above step III, before the flue gas is introduced into the separation area 49, the method further includes: the flue gas is introduced into the dust falling area 47 of the collection and separation chamber 7; the flue gas produced by the pyrolysis and carbonization chamber 12 in running is introduced into the collection and separation chamber 7 via the flue gas inlet; and the flue gas is at least separately treated in the dust falling area and the separation area in the collection and separation chamber 7. Specifically, flue gas and smoke dust which are produced by the pyrolysis and carbonization chamber 12 in running are introduced into the collection and separation chamber 7 via the flue gas inlet 8, and the flue gas and the smoke dust are separately treated in different areas such as the dust falling area 47, the separation area 49, the collection box 48, and a flue in the collection and separation chamber 7. A dust falling effect is achieved on the smoke dust in the dust falling area 47 through a partition plate IV 37 and a partition plate III 36, and dust is discharged through a cleaning door 46. The flue gas enters the separation area 49 from above the partition plate II 35; the sprayer I 34 has functions of sealing, drafting, condensation and separation; the sealing function means that the two partition plates (the partition plate I 33 and the partition plate II 35) and the sprayer I 34 that is in a working state jointly construct a space, and the space forces hot air flow to pass through and satisfies a temperature condition for converting the pyrolyzed gaseous biomass energy into liquid (a boundary temperature value for converting gaseous biomass energy into liquid biomass energy is 80°C); the drafting function refers to a downward jetting force of a spray atomizer; the condensation function refers to spraying liquid with a temperature of 40°C or below; and the separation function refers to separating liquid, gas, and dust. The kinetic energy of the water pump 11 is used to create the functions of sealing, drafting, condensation and separation for the separation area 49; the main component-biomass energy in the flue gas is converted into the straw vinegar for recycling; and the utilization rate of biomass energy of straws of the original device is increased by 30-33% to 50%.

In the above step IV, the recycled straw vinegar falls into the collection box 48 below, and the collection box 48 is provided with a collected liquid outlet 38 (used as an overflow opening) and a sewage draining exit 42. The recycled straw vinegar flows out from the collected liquid outlet 38, and the outflow straw vinegar is mixed into and participates in the spraying circulating system, and is gradually transitioned to the self-circulation of straw vinegar spraying. Firstly, the self-circulation of the straw vinegar ensures the continuous running of the collection and separation chamber 7 through the sprayer I 34, so as to cyclically recycle the straw vinegar. Secondly, the straw vinegar is added into the sprayer II 51, and the straw carbon is subjected to cooling, fire extinguishing and dust falling using the straw vinegar, so that the working environment is improved, a load of carrying a water source on the mobile device is reduced and all-weather running of the equipment is guaranteed. Finally, the flue gas enters the flue through below the partition plate I 33, and is discharged through the exhaust funnel 4.

According to the present application, the separation area 49 is used to recycle, through the sprayer I 34, gaseous biomass energy produced during the pyrolysis, and biomass energy conversion liquid is used to replace water; the gaseous biomass energy is continuously recycled and converted, and the main component-biomass energy in the flue gas is converted into the straw vinegar for recycling, so that the utilization rate of biomass energy of straws of the original device is increased by 30-33% to 50%; and meanwhile, the biomass energy conversion liquid replaces water to make suspended particles produced during the pyrolysis and carbonization settle down. In the present application, two chain scraper conveyors are used to connect material feeding with pyrolysis, and a relationship between a feeding amount and a pyrolysis time is transformed into a relationship between mechanical transmission rates, so that it is easier and more reliable to control the pyrolysis degree. In addition, the two independent pyrolysis and carbonization tanks in the original device are changed into one chamber body that is divided into upper and lower parts by the chain scraper conveyor, and the two parts are closely connected with each other and have different functions. The thermal energy utilization efficiency of the present application is improved, thereby laying a foundation for the standard production of different types of straw carbon. For example, due to a controllable degree of pyrolysis, if the main purpose of straw carbon production is to return "carbon" to fields, and to pursue "carbon neutralization", a deep carbonization process that prolongs the carbonization time is adopted. On the contrary, if the main purpose is to kill insect eggs and pathogenic bacteria, and to return more original organic matters to fields, a light carbonization process with short carbonization time (only several minutes) is adopted. To sum up, the present application has a good market application prospect.

In the description of the present application, unless otherwise explicitly specified or defined, the terms such as "connect", "connection", and "fixed" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components or mutual interaction relationship between two components. A person of ordinary skill in the art may understand the specific meanings of the foregoing terms in the present application according to specific situations.

In the present application, unless otherwise clearly stipulated and limited, that a first feature is "above" or "below" a second feature may include that the first feature directly contacts the second feature, or may include that the first feature does not contact the second feature directly but contacts the second feature by means of another feature between them. Moreover, the first feature being "over", "above", and "on" the second feature includes that the first feature is directly above or obliquely above the second feature, or only means that a horizontal height of the first feature is higher than that of the second feature. That the first feature is "below", "under", and "underneath" the second feature includes that the first feature is directly below or obliquely below the second feature, or only means that a horizontal height of the first feature is lower than that of the second feature.

In the description of this embodiment, orientation or position relationships indicated by the terms such as "upper", "lower", "left", and "right" are based on orientation or position relationships shown in the accompanying drawings, and are used only for ease and brevity of illustration and operation, rather than indicating or implying that the mentioned apparatus or component needs to have a particular orientation or needs to be constructed and operated in a particular orientation. Therefore, such terms should not be construed as limiting of the present application. In addition, the terms "first" and "second" are only used for distinction in description, and have no special meaning.

The foregoing specific embodiments are merely intended for describing the technical solutions of the present application but not for limiting the present application.

## Claims

1. A device for rapidly preparing carbon from straws and recycling and treating flue gas and smoke dust, comprising
a pyrolysis and carbonization chamber (12), and a collection and separation chamber (7), wherein the pyrolysis and carbonization chamber (12) and the collection and separation chamber (7) are communicated with each other through a flue gas inlet (8);
the collection and separation chamber (7) comprises a separation area (49) in which a sprayer I (34) is further disposed; and
flue gas enters the separation area (49) through the flue gas inlet (8) and is then discharged;
the separation area (49) comprises a partition plate I (33) and a partition plate II (35) which are disposed at upper and lower positions; the flue gas enters the separation area (49) from above the partition plate II (35); and the flue gas enters an exhaust funnel (4) from below the partition plate I (33), wherein, the partition plate I (33) and the partition plate II (35) and the sprayer I (34) jointly construct a space for forcing the flue gas to pass through and enabling the gaseous biomass energy in the flue gas to convert into straw vinegar;
a collection box (48) is further arranged below the separation area (49);
the collection box (48) is further communicated with the sprayer I (34);
the pyrolysis and carbonization chamber (12) is further provided with an oxygen supply opening and oxygen control valve (6), which are used to adjust the volume of fed oxygen through controlling the oxygen supply port and oxygen control valve (6) to adjust the pyrolysis degree of straw;
the collection and separation chamber (7) further comprises a dust falling area (47) which is communicated with the separation area (49); and after entering the dust falling area (47) of the collection and separation chamber (7) through the flue gas inlet (8), the flue gas enters the separation area (49), and is then discharged through a flue, wherein at least one partition plate III (36), at least one partition plate IV (37), or at least one partition plate III (36) and one partition plate IV (37) which are disposed on the left and right in a spacing manner are arranged in the dust falling area (47) for allowing the flue gas to pass.

2. The device for rapidly preparing carbon from straws and recycling and treating flue gas and the smoke dust according to claim 1, wherein a water pump (11) is arranged on the collection and separation chamber (7), and an outlet of the water pump (11) is connected to the sprayer I (34) respectively through a pipeline (10).

3. The device for rapidly preparing carbon from straws and recycling and treating flue gas and the smoke dust according to claim 1, wherein a water pump (11) is further connected between the collection box (48) and the sprayer I (34).

4. The device for rapidly preparing carbon from straws and recycling and treating flue gas and the smoke dust according to claim 1, wherein an upper part of the collection box (48) is provided with a collected liquid outlet (38), and a bottom of the collection box (48) is provided with a sewage draining exit (39).

5. The device for rapidly preparing carbon from straws and recycling and treating flue gas and the smoke dust according to any one of claims 1 to 4, wherein a bottom of the dust falling area (47) is provided with a cleaning door (46).

6. The device for rapidly preparing carbon from straws and recycling and treating flue gas and the smoke dust according to any one of claims 1 to 4, wherein a thermal insulation material (43) is arranged between the pyrolysis and carbonization chamber (12) and the collection and separation chamber (7).

7. The device for rapidly preparing carbon from straws and recycling and treating flue gas and the smoke dust according to claim 1, wherein a conveying device used for conveying a material is mounted in the pyrolysis and carbonization chamber (12).

8. The device for rapidly preparing carbon from straws and recycling and treating flue gas and the smoke dust according to claim 7, wherein the conveying device comprises a parallel conveying device, and the parallel conveying device adopts a parallel chain scraper conveyor (5).

9. The device for rapidly preparing carbon from straws and recycling and treating flue gas and the smoke dust according to claim 1, wherein a material inlet (45) of the pyrolysis and carbonization chamber (12) is further communicated with a feeding device, and/or, a material outlet (39) of the pyrolysis and carbonization chamber (12) is further communicated with a discharging device.

10. The device for rapidly preparing carbon from straws and recycling and treating flue gas and the smoke dust according to claim 9, wherein the feeding device adopts a chain scraper conveyor (1); and/or, the discharging device adopts a screw conveyor I (22); and an outlet of the screw conveyor I (22) is connected with a discharging barrel (25).

11. The device for rapidly preparing carbon from straws and recycling and treating flue gas and the smoke dust according to claim 10, wherein the device further comprises a discharging barrel (25), which is arranged at an outlet of the discharging device; and a screw conveyor II (40) is further mounted in the discharging barrel (25).

12. The device for rapidly preparing carbon from straws and recycling and treating flue gas and the smoke dust according to claim 11, wherein a sprayer II (51) is further mounted in the discharging barrel (25), and/or, the sprayer II (51) is further connected with the collection box (48), and used for cooling, extinguishing, and dust removal of the carbonized material sent by the screw conveyor I (22).

13. The device for rapidly preparing carbon from straws and recycling and treating flue gas and the smoke dust according to claim 12, wherein a screw conveyor I (22) and the screw conveyor II (40) are intersected by 90 degrees, a sealing cover (41) is arranged at an outlet of the screw conveyor II (40), and the screw conveyor II (40) is hermetically connected to the sprayer II (51) through a pipeline; wherein at a pipeline outlet of the sprayer II (51), cold spraying liquid and hot straw carbon are in contact with each other, and produced gas blocks gas outside the device for rapidly preparing carbon from straws and recycling and treating flue gas and the smoke dust, so that the sealing cover (41) is opened and intact straw carbon is pushed out.

14. A method for rapidly preparing carbon from straws and recycling and treating flue gas and smoke dust, wherein the method is used for treating the straws by the device for rapidly preparing carbon from straws and recycling and treating flue gas and the smoke dust according to any one of claims 1 to 13, the method comprising:
introducing straws that are ignited outside into the pyrolysis and carbonization chamber (12), and adjusting the volume of fed oxygen through controlling the oxygen supply port and the oxygen control valve (6);
introducing flue gas produced by the pyrolysis and carbonization chamber (12) in running into the collection and separation chamber (7) via the flue gas inlet (8), and at least separately treating the flue gas in the separation area (49) in the collection and separation chamber (7);
introducing the flue gas into the separation area (49), and converting a gaseous biomass energy in the flue gas into straw vinegar using the sprayer I (34) in the separation area (49), wherein the flue gas enters the separation area (49) from above the partition plate II (35), and the flue gas enters the exhaust funnel (4) from below the partition plate I (33);
recycling the straw vinegar, wherein the recycled straw vinegar falls off to be collected, and the collected straw vinegar enters a spraying circulating system; and finally, the flue gas enters the flue and is discharged.

15. The method for rapidly preparing carbon from straws and recycling and treating flue gas and the smoke dust according to claim 14, further comprising: before introducing the flue gas into the separation area (49), introducing the flue gas into a dust falling area (47) of the collection and separation chamber (7), introducing the flue gas produced by the pyrolysis and carbonization chamber (12) in running into the collection and separation chamber (7) via the flue gas inlet (8), and at least separately treating the flue gas in the dust falling area (47) and the separation area (49) in the collection and separation chamber (7).

## Patentansprüche

1. Vorrichtung zur schnellen Herstellung von Kohlenstoff aus Stroh sowie zur Rückführung und Behandlung von Rauchgas und Rauchstaub, umfassend
eine Pyrolyse- und Karbonisierungskammer (12) und eine Sammel- und Trennkammer (7), wobei die Pyrolyse- und Karbonisierungskammer (12) und die Sammel- und Trennkammer (7) durch einen Rauchgaseinlass (8) miteinander in Kommunikation stehen;
die Sammel- und Trennkammer (7) einen Trennbereich (49) umfasst, in dem ein Sprüher I (34) ferner angeordnet ist; und
Rauchgas durch den Rauchgaseinlass (8) in den Trennbereich (49) eintritt und dann abgeführt wird;
der Trennbereich (49) eine Teilungsplatte I (33) und eine Teilungsplatte II (35) umfasst, die an einer oberen und einer unteren Position angeordnet sind; das Rauchgas von oberhalb der Teilungsplatte II (35) in den Trennbereich (49) eintritt; und das Rauchgas von unterhalb der Teilungsplatte I (33) in einen Auslasstrichter (4) eintritt, wobei die Teilungsplatte I (33) und die Teilungsplatte II (35) sowie der Sprüher I (34) gemeinsam einen Raum bilden, um das Rauchgas zum Durchlaufen zu drängen und eine Umwandlung der gasförmigen Biomasseenergie in dem Rauchgas in Strohessig zu ermöglichen;
ein Sammelbehälter (48) ferner unterhalb des Trennbereichs (49) angeordnet ist;
der Sammelbehälter (48) ferner mit dem Sprüher I (34) in Kommunikation steht;
die Pyrolyse- und Karbonisierungskammer (12) ferner mit einer Sauerstoffversorgungsöffnung und einem Sauerstoffsteuer- bzw. -regelventil (6) versehen ist, die verwendet werden, um das Volumen von zugeführtem Sauerstoff durch Steuern bzw. Regeln des Sauerstoffversorgungsanschlusses und des Sauerstoffsteuer- bzw. -regelventils (6) einzustellen, um den Pyrolysegrad von Stroh einzustellen;
die Sammel- und Trennkammer (7) umfasst ferner einen Staubfallbereich (47), der mit dem Trennbereich (49) in Kommunikation steht; und nach Eintreten in den Staubfallbereich (47) der Sammel- und Trennkammer (7) durch den Rauchgaseinlass (8) das Rauchgas in den Trennbereich (49) eintritt und dann durch einen Kamin abgeführt wird, wobei mindestens eine Teilungsplatte III (36), mindestens eine Teilungsplatte IV (37) oder mindestens eine Teilungsplatte III (36) und eine Teilungsplatte IV (37), die links und rechts beabstandet angeordnet sind, in dem Staubfallbereich (47) angeordnet sind, um ein Passieren des Rauchgases zu ermöglichen.

2. Vorrichtung zur schnellen Herstellung von Kohlenstoff aus Stroh sowie zur Rückführung und Behandlung von Rauchgas und des Rauchstaubs nach Anspruch 1, wobei eine Wasserpumpe (11) an der Sammel- und Trennkammer (7) angeordnet ist und ein Auslass der Wasserpumpe (11) jeweils durch eine Rohrleitung (10) mit dem Sprüher I (34) verbunden ist.

3. Vorrichtung zur schnellen Herstellung von Kohlenstoff aus Stroh sowie zur Rückführung und Behandlung von Rauchgas und des Rauchstaubs nach Anspruch 1, wobei eine Wasserpumpe (11) ferner zwischen dem Sammelbehälter (48) und dem Sprüher I (34) verbunden ist.

4. Vorrichtung zur schnellen Herstellung von Kohlenstoff aus Stroh sowie zur Rückführung und Behandlung von Rauchgas und des Rauchstaubs nach Anspruch 1, wobei ein oberer Teil des Sammelbehälters (48) mit einem Auslass (38) für gesammelte Flüssigkeit versehen ist und ein Boden des Sammelbehälters (48) mit einem Ausgang (39) zum Ablauf von Abwasser versehen ist.

5. Vorrichtung zur schnellen Herstellung von Kohlenstoff aus Stroh sowie zur Rückführung und Behandlung von Rauchgas und des Rauchstaubs nach einem der Ansprüche 1 bis 4, wobei ein Boden des Staubfallbereichs (47) mit einer Reinigungstür (46) versehen ist.

6. Vorrichtung zur schnellen Herstellung von Kohlenstoff aus Stroh sowie zur Rückführung und Behandlung von Rauchgas und des Rauchstaubs nach einem der Ansprüche 1 bis 4, wobei ein Wärmeisoliermaterial (43) zwischen der Pyrolyse- und Karbonisierungskammer (12) und der Sammel- und Trennkammer (7) angeordnet ist.

7. Vorrichtung zur schnellen Herstellung von Kohlenstoff aus Stroh sowie zur Rückführung und Behandlung von Rauchgas und des Rauchstaubs nach Anspruch 1, wobei eine zum Befördern eines Materials verwendete Fördervorrichtung in der Pyrolyse- und Karbonisierungskammer (12) montiert ist.

8. Vorrichtung zur schnellen Herstellung von Kohlenstoff aus Stroh sowie zur Rückführung und Behandlung von Rauchgas und des Rauchstaubs nach Anspruch 7, wobei die Fördervorrichtung eine Parallelfördervorrichtung umfasst und die Parallelfördervorrichtung einen Parallelkettenkratzförderer (5) aufweist.

9. Vorrichtung zur schnellen Herstellung von Kohlenstoff aus Stroh sowie zur Rückführung und Behandlung von Rauchgas und des Rauchstaubs nach Anspruch 1, wobei ein Materialeinlass (45) der Pyrolyse- und Karbonisierungskammer (12) ferner mit einer Zufuhrvorrichtung in Kommunikation steht und/oder ein Materialauslass (39) der Pyrolyse- und Karbonisierungskammer (12) ferner mit einer Abfuhrvorrichtung in Kommunikation steht.

10. Vorrichtung zur schnellen Herstellung von Kohlenstoff aus Stroh sowie zur Rückführung und Behandlung von Rauchgas und des Rauchstaubs nach Anspruch 9, wobei die Zufuhrvorrichtung einen Kettenkratzförderer (1) aufweist; und/oder die Abfuhrvorrichtung einen Schneckenförderer I (22) aufweist; und ein Auslass des Schneckenförderers I (22) mit einer Abfuhrtrommel (25) verbunden ist.

11. Vorrichtung zur schnellen Herstellung von Kohlenstoff aus Stroh sowie zur Rückführung und Behandlung von Rauchgas und des Rauchstaubs nach Anspruch 10, wobei die Vorrichtung ferner eine Abfuhrtrommel (25) umfasst, die an einem Auslass der Abfuhrvorrichtung angeordnet ist; und ein Schneckenförderer II (40) ferner in der Abfuhrtrommel (25) montiert ist.

12. Vorrichtung zur schnellen Herstellung von Kohlenstoff aus Stroh sowie zur Rückführung und Behandlung von Rauchgas und des Rauchstaubs nach Anspruch 11, wobei ein Sprüher II (51) ferner in der Abfuhrtrommel (25) montiert ist und/oder der Sprüher II (51) ferner mit dem Sammelbehälter (48) verbunden ist und zum Kühlen, Löschen und Entstauben des durch den Schneckenförderer I (22) geschickten karbonisierten Materials verwendet wird.

13. Vorrichtung zur schnellen Herstellung von Kohlenstoff aus Stroh sowie zur Rückführung und Behandlung von Rauchgas und des Rauchstaubs nach Anspruch 12, wobei sich ein Schneckenförderer I (22) und der Schneckenförderer II (40) um 90 Grad überschneiden, eine Dichtungsabdeckung (41) an einem Auslass des Schneckenförderers II (40) angeordnet ist und der Schneckenförderer II (40) durch eine Rohrleitung hermetisch mit dem Sprüher II (51) verbunden ist; wobei an einem Rohrleitungsauslass des Sprühers II (51) kalte Sprühflüssigkeit und heißer Strohkohlenstoff miteinander in Kontakt stehen und produziertes Gas Gas außerhalb der Vorrichtung zur schnellen Herstellung von Kohlenstoff aus Stroh sowie zur Rückführung und Behandlung von Rauchgas und des Rauchstaubs blockiert, sodass die Dichtungsabdeckung (41) geöffnet wird und intakter Strohkohlenstoff herausgedrückt wird.

14. Verfahren zur schnellen Herstellung von Kohlenstoff aus Stroh sowie zur Rückführung und Behandlung von Rauchgas und Rauchstaub, wobei das Verfahren zur Behandlung des Strohs durch die Vorrichtung zur schnellen Herstellung von Kohlenstoff aus Stroh sowie zur Rückführung und Behandlung von Rauchgas und des Rauchstaubs nach einem der Ansprüche 1 bis 13 verwendet wird, wobei das Verfahren umfasst:
Einleiten von Stroh, das außerhalb gezündet wird, in die Pyrolyse- und Karbonisierungskammer (12) und Einstellen des Volumens von zugeführtem Sauerstoff durch Steuern bzw. Regeln des Sauerstoffversorgungsanschlusses und des Sauerstoffsteuer- bzw. -regelventils (6);
Einleiten von durch den Betrieb der Pyrolyse- und Karbonisierungskammer (12) produziertem Rauchgas in die Sammel- und Trennkammer (7) über den Rauchgaseinlass (8) und zumindest separates Behandeln des Rauchgases in dem Trennbereich (49) in der Sammel- und Trennkammer (7);
Einleiten des Rauchgases in den Trennbereich (49) und Umwandeln einer gasförmigen Biomasseenergie in dem Rauchgas in Strohessig unter Verwendung des Sprühers I (34) in dem Trennbereich (49), wobei das Rauchgas von oberhalb der Teilungsplatte II (35) in den Trennbereich (49) eintritt und das Rauchgas von unterhalb der Teilungsplatte I (33) in den Auslasstrichter (4) eintritt;
Zurückführen des Strohessigs, wobei der zurückgeführte Strohessig zur Sammlung abfällt und der gesammelte Strohessig in ein Sprühumlaufsystem eintritt; und schließlich das Rauchgas in den Kamin eintritt und abgeführt wird.

15. Verfahren zur schnellen Herstellung von Kohlenstoff aus Stroh sowie zur Rückführung und Behandlung von Rauchgas und des Rauchstaubs nach Anspruch 14, ferner umfassend: vor dem Einleiten des Rauchgases in den Trennbereich (49), Einleiten des Rauchgases in einen Staubfallbereich (47) der Sammel- und Trennkammer (7), Einleiten des durch den Betrieb der Pyrolyse- und Karbonisierungskammer (12) produzierten Rauchgases in die Sammel- und Trennkammer (7) über den Rauchgaseinlass (8) und zumindest separates Behandeln des Rauchgases in dem Staubfallbereich (47) und dem Trennbereich (49) in der Sammel- und Trennkammer (7).

## Revendications

1. Dispositif de préparation rapide de charbon à partir de pailles et de recyclage et traitement de gaz de fumées et de poussière de fumée, comprenant une chambre de pyrolyse et de carbonisation (12), et une chambre de recueil et de séparation (7), dans lequel la chambre de pyrolyse et de carbonisation (12) et la chambre de recueil et de séparation (7) sont en communication l'une avec l'autre à travers une entrée de gaz de fumées (8) ;
la chambre de recueil et de séparation (7) comprend une zone de séparation (49) dans laquelle un pulvérisateur I (34) est en outre disposé ; et
du gaz de fumées pénètre dans la zone de séparation (49) à travers l'entrée de gaz de fumées (8) et est ensuite évacué ;
la zone de séparation (49) comprend une plaque de cloison I (33) et une plaque de cloison II (35) qui sont disposées à des positions supérieure et inférieure ; le gaz de fumées pénètre dans la zone de séparation (49) depuis le dessus de la plaque de cloison II (35) ; et le gaz de fumées pénètre dans un entonnoir d'échappement (4) depuis le dessous de la plaque de cloison I (33), dans lequel la plaque de cloison I (33) et la plaque de cloison II (35) et le pulvérisateur I (34) construisent conjointement un espace pour forcer le gaz de fumées à traverser et permettre à l'énergie de biomasse gazeuse dans le gaz de fumées de se convertir en vinaigre de paille ;
une boîte de recueil (48) est en outre agencée en dessous de la zone de séparation (49) ;
la boîte de recueil (48) est en outre en communication avec le pulvérisateur I (34) ;
la chambre de pyrolyse et de carbonisation (12) est en outre pourvue d'une ouverture d'alimentation en oxygène et d'une soupape de commande d'oxygène (6) qui sont utilisées pour ajuster le volume d'oxygène alimenté en commandant le port d'alimentation en oxygène et la soupape de commande d'oxygène (6) pour ajuster le degré de pyrolyse de la paille ;
la chambre de recueil et de séparation (7) comprend en outre une zone de chute de poussière (47) qui est en communication avec la zone de séparation (49) ; et après avoir pénétré dans la zone de chute de poussière (47) de la chambre de recueil et de séparation (7) à travers l'entrée de gaz de fumées (8), le gaz de fumées pénètre dans la zone de séparation (49), puis est évacué à travers un carneau, dans lequel au moins une plaque de cloison III (36), au moins une plaque de cloison IV (37) ou au moins une plaque de cloison III (36) et une plaque de cloison IV (37) qui sont disposées sur la gauche et la droite de manière espacée sont agencées dans la zone de chute de poussière (47) pour permettre au gaz de fumées de passer.

2. Dispositif de préparation rapide de charbon à partir de pailles et de recyclage et traitement de gaz de fumées et de la poussière de fumée selon la revendication 1, dans lequel une pompe à eau (11) est agencée sur la chambre de recueil et de séparation (7), et une sortie de la pompe à eau (11) est connectée au pulvérisateur I (34) respectivement à travers une conduite (10).

3. Dispositif de préparation rapide de charbon à partir de pailles et de recyclage et traitement de gaz de fumées et de la poussière de fumée selon la revendication 1, dans lequel une pompe à eau (11) est en outre connectée entre la boîte de recueil (48) et le pulvérisateur I (34).

4. Dispositif de préparation rapide de charbon à partir de pailles et de recyclage et traitement de gaz de fumées et de la poussière de fumée selon la revendication 1, dans lequel une partie supérieure de la boîte de recueil (48) est pourvue d'une sortie de liquide recueilli (38), et un fond de la boîte de recueil (48) est pourvu d'une sortie de purge d'eaux usées (39).

5. Dispositif de préparation rapide de charbon à partir de pailles et de recyclage et traitement de gaz de fumées et de la poussière de fumée selon l'une quelconque des revendications 1 à 4, dans lequel un fond de la zone de chute de poussière (47) est pourvu d'une porte de nettoyage (46).

6. Dispositif de préparation rapide de charbon à partir de pailles et de recyclage et traitement de gaz de fumées et de la poussière de fumée selon l'une quelconque des revendications 1 à 4, dans lequel un matériau d'isolation thermique (43) est agencé entre la chambre de pyrolyse et de carbonisation (12) et la chambre de recueil et de séparation (7).

7. Dispositif de préparation rapide de charbon à partir de pailles et de recyclage et traitement de gaz de fumées et de la poussière de fumée selon la revendication 1, dans lequel un dispositif de transport utilisé pour transporter un matériau est monté dans la chambre de pyrolyse et de carbonisation (12).

8. Dispositif de préparation rapide de charbon à partir de pailles et de recyclage et traitement de gaz de fumées et de la poussière de fumée selon la revendication 7, dans lequel le dispositif de transport comprend un dispositif de transport parallèle, et le dispositif de transport parallèle adopte un transporteur à raclettes à chaîne parallèle (5).

9. Dispositif de préparation rapide de charbon à partir de pailles et de recyclage et traitement de gaz de fumées et de la poussière de fumée selon la revendication 1, dans lequel une entrée de matériau (45) de la chambre de pyrolyse et de carbonisation (12) est en outre en communication avec un dispositif d'alimentation, et/ou une sortie de matériau (39) de la chambre de pyrolyse et de carbonisation (12) est en outre en communication avec un dispositif d'évacuation.

10. Dispositif de préparation rapide de charbon à partir de pailles et de recyclage et traitement de gaz de fumées et de la poussière de fumée selon la revendication 9, dans lequel le dispositif d'alimentation adopte un transporteur à raclettes à chaîne (1) ; et/ou le dispositif d'évacuation adopte un transporteur à vis I (22) ; et une sortie du transporteur à vis I (22) est connectée à un baril d'évacuation (25).

11. Dispositif de préparation rapide de charbon à partir de pailles et de recyclage et traitement de gaz de fumées et de la poussière de fumée selon la revendication 10, dans lequel le dispositif comprend en outre un baril d'évacuation (25) qui est agencé à une sortie du dispositif d'évacuation ; et un transporteur à vis II (40) est en outre monté dans le baril d'évacuation (25).

12. Dispositif de préparation rapide de charbon à partir de pailles et de recyclage et traitement de gaz de fumées et de la poussière de fumée selon la revendication 11, dans lequel un pulvérisateur II (51) est en outre monté dans le baril d'évacuation (25), et/ou le pulvérisateur II (51) est en outre connecté à la boîte de recueil (48) et utilisé pour le refroidissement, l'extinction et l'élimination de poussière du matériau carbonisé envoyé par le transporteur à vis I (22).

13. Dispositif de préparation rapide de charbon à partir de pailles et de recyclage et traitement de gaz de fumées et de la poussière de fumée selon la revendication 12, dans lequel un transporteur à vis I (22) et le transporteur à vis II (40) sont coupés par 90 degrés, un recouvrement d'étanchéité (41) est agencé à une sortie du transporteur à vis II (40), et le transporteur à vis II (40) est hermétiquement connecté au pulvérisateur II (51) par une conduite ; dans lequel à une sortie de conduite du pulvérisateur II (51), du liquide de pulvérisation froid et du charbon de paille chaud sont en contact l'un avec l'autre, et du gaz produit bloque du gaz à l'extérieur du dispositif pour préparer rapidement du charbon à partir de pailles et recycler et traiter du gaz de fumées et la poussière de fumée de sorte que le recouvrement d'étanchéité (41) est ouvert et du charbon de paille intact est expulsé.

14. Procédé de préparation rapide de charbon à partir de pailles et de recyclage et traitement de gaz de fumées et de poussière de fumée, dans lequel le procédé est utilisé pour traiter les pailles par le dispositif de préparation rapide de charbon à partir de pailles et de recyclage et traitement de gaz de fumées et de la poussière de fumée selon l'une quelconque des revendications 1 à 13, le procédé comprenant :
introduire des pailles qui sont allumées à l'extérieur dans la chambre de pyrolyse et de carbonisation (12), et ajuster le volume d'oxygène alimenté en commandant le port d'alimentation en oxygène et la soupape de commande d'oxygène (6) ;
introduire du gaz de fumées produit par la chambre de pyrolyse et de carbonisation (12) en écoulement dans la chambre de recueil et de séparation (7) par le biais de l'entrée de gaz de fumées (8), et traiter au moins séparément le gaz de fumées dans la zone de séparation (49) dans la chambre de recueil et de séparation (7) ;
introduire le gaz de fumées dans la zone de séparation (49) et convertir une énergie de biomasse gazeuse dans le gaz de fumées en vinaigre de paille en utilisant le pulvérisateur I (34) dans la zone de séparation (49), dans lequel le gaz de fumées pénètre dans la zone de séparation (49) du dessus de la plaque de cloison II (35) et le gaz de fumées pénètre dans l'entonnoir d'échappement (4) du dessous de la plaque de cloison I (33) ;
recycler le vinaigre de paille, dans lequel le vinaigre de paille recyclé chute pour être recueilli, et le vinaigre de paille recueilli pénètre dans un système circulant de pulvérisation ; et le gaz de fumées pénètre finalement dans le carneau et est évacué.

15. Procédé de préparation rapide de charbon à partir de pailles et de recyclage et traitement de gaz de fumées et de la poussière de fumée selon la revendication 14, comprenant en outre : avant d'introduire le gaz de fumées dans la zone de séparation (49), introduire le gaz de fumées dans une zone de chute de poussière (47) de la chambre de recueil et de séparation (7), introduire le gaz de fumées produit par la chambre de pyrolyse et de carbonisation (12) en écoulement dans la chambre de recueil et de séparation (7) par le biais de l'entrée de gaz de fumées (8), et traiter au moins séparément le gaz de fumées dans la zone de chute de poussière (47) et la zone de séparation (49) dans la chambre de recueil et de séparation (7).
